Europäisches Patentamt

European Patent Office

Office européen des brevets

(19)

(11) Numéro de publication : **0 295 995 B1**

# FASCICULE DE BREVET EUROPEEN

(12)

(45) Date de publication du fascicule du brevet :
24.07.91 Bulletin 91/30

(51) Int. Cl.⁵ : **G21C 17/10**

(21) Numéro de dépôt : **88401305.3**

(22) Date de dépôt : **27.05.88**

(54) **Procédé et dispositif de nettoyage d'un tube de guidage d'un moyen de mesure de flux neutronique dans un réacteur nucléaire refroidi à l'eau sous pression.**

(30) Priorité : **17.06.87 FR 8708478**

(43) Date de publication de la demande :
**21.12.88 Bulletin 88/51**

(45) Mention de la délivrance du brevet :
**24.07.91 Bulletin 91/30**

(84) Etats contractants désignés :
**BE CH DE ES GB LI SE**

(56) Documents cités :
**EP-A- 0 185 561**

(73) Titulaire : **FRAMATOME**
**Tour Fiat 1, Place de la Coupole**
**F-92400 Courbevoie (FR)**

(72) Inventeur : **Le Dantec, Olivier**
**78 rue Cuvier**
**F-69006 Lyon (FR)**

(74) Mandataire : **Bouget, Lucien et al**
**Cabinet Lavoix 2, Place d'Estienne d'Orves**
**F-75441 Paris Cédex 09 (FR)**

EP 0 295 995 B1

## Description

L'invention concerne un procédé et un dispositif de nettoyage d'un tube de guidage d'un moyen de mesure de flux neutronique dans un réacteur nucléaire à eau sous pression.

Les réacteurs nucléaires à eau sous pression comportent un coeur constitué d'assemblages de forme prismatique disposés verticalement et reposant sur une plaque de support à l'intérieur de la cuve du réacteur nucléaire.

Pendant le fonctionnement du réacteur nucléaire, il est nécessaire de réaliser périodiquement des mesures de flux à l'intérieur même du coeur. On utilise pour cela des détecteurs à fission de très petites dimensions qui sont déplacés par commande à distance à l'aide de câbles téléflex à l'intérieur de tubes fermés à l'une de leurs extrémités appelés doigts de gant. Les doigts de gant sont introduits suivant une répartition prédéterminée dans toute la hauteur de certains assemblages du coeur, après passage à l'intérieur de tubes d'instrumentation. Par déplacement des détecteurs de flux à l'intérieur des doigts de gant introduits dans les assemblages, on peut effectuer des mesures de flux suivant toute la hauteur du coeur. Les doigts de gant doivent pouvoir être extraits des assemblages du coeur, par exemple pour permettre d'effectuer les opérations de rechargement du coeur du réacteur ; pour cela, on exerce une traction sur l'extrémité des doigts de gant, depuis un local d'instrumentation disposé latéralement par rapport au puits de cuve du réacteur. Les doigts de gant sont disposés dans des tubes de guidage dont l'une des extrémités débouche dans le local d'instrumentation et dont l'autre extrémité débouche dans le volume intérieur de la cuve, par l'intermédiaire d'une manchette verticale de traversée du fond de cuve, ce fond de cuve étant de forme bombée. Entre ses deux extrémités, le tube de guidage comporte au moins une partie coudée.

Les équipements internes inférieurs du réacteur comportent, outre la plaque de support du coeur sur laquelle reposent les assemblages, l'enveloppe et le cloisonnement du coeur et un ensemble d'éléments disposés entre la plaque de support du coeur et le fond bombé inférieur de la cuve comportant en particulier des colonnes de guidage de l'instrumentation délimitant chacune un conduit central de guidage dans le prolongement de l'alésage interne de la manchette de traversée correspondante. L'extrémité de chacune des manchettes de traversée est engagée dans l'extrémité d'entrée du conduit de guidage correspondant, avec un jeu radial relativement important qui permet de faciliter la mise en place des équipements internes inférieurs et la mise en coïncidence de chacune des manchettes de traversée avec le canal de guidage correspondant.

Le diamètre intérieur des tubes et des conduits de guidage et des tubes d'instrumentation des assemblages est tel qu'un jeu suffisant subsiste entre le doigt de gant et son conduit de guidage. On peut donc manoeuvrer facilement les doigts de gant par traction et poussée pour les extraire du coeur sur toute la hauteur de celui-ci (c'est-à-dire sur une longueur voisine de 4 m) et pour les réintroduire dans le coeur, respectivement.

On s'est aperçu cependant, qu'après un certain temps de fonctionnement du réacteur, l'effort nécessaire pour extraire les doigts de gant et surtout l'effort nécessaire pour les réinsérer, augmentaient sensiblement. Par exemple, l'effort d'insertion des doigts de gant qui peut être par exemple de 100 à 150 Newton sur un réacteur à sa mise en service peut augmenter, dans ce cas, jusqu'à une valeur de 400 à 500 Newton après le second rechargement. On a put attribuer cette augmentation de l'effort d'insertion des doigts de gant à la présence de particules solides venant se déposer entre le doigt de gant et la paroi interne du tube de guidage, en particulier au voisinage des coudes de ce tube de guidage. En effet, les doigts de gant provoquent pendant leur déplacement une accumulation de particules dans la région des coudes et favorisent leur tassement.

On a donc proposé un procédé de nettoyage des tubes de guidage au moment des opérations de rechargement du coeur du réacteur. La cuve est alors ouverte à sa partie supérieure et en communication avec la piscine du réacteur, l'ensemble étant rempli d'eau. Pour la mise en oeuvre du procédé de nettoyage, on a prévu des moyens d'injection d'eau déminéralisée sous pression dans les tubes de guidage, par leur extrémité débouchant dans le local de l'instrumentation.

Il est cependant nécessaire de récupérer cette eau déminéralisée et les particules qu'elle contient en suspension à l'autre extrémité des tubes de guidage pour éviter que des particules radio-actives ne tombent au fond de la cuve remplie d'eau.

Il est donc nécessaire de récupérer l'eau déminéralisée à la sortie des manchette de traversée. Pour accéder à ces manchettes, on procède généralement au démontage des équipements internes inférieurs qui sont extraits de la cuve, les équipements internes supérieurs et les assemblages du coeur ayant été préalablement extraits.

On vient mettre successivement en place sur l'extrémité de chacune des manchettes, pendant l'injection d'eau sous pression dans le tube de guidage correspondant, des moyens de récupération de l'eau et des particules radio-actives.

Ces moyens sont mis en place depuis la passerelle de la machine de chargement au-dessus de la piscine du réacteur, grâce une perche de très grande longueur portant à sa partie inférieure une caméra permettant de visualiser les opérations de mise en place des moyens de récupération. Ces moyens comportent une coiffe cylindrique munie intérieurement d'un joint d'un diamètre correspondant au diamètre de la manchette, un tube flexible communiquant avec le volume intérieur de la coiffe cylindrique sur lequel est disposée une vanne commandée par une tringlerie depuis la passerelle et un ensemble de filtration auquel aboutit le tube flexible au-dessus du niveau de la piscine.

La réalisation de ces opérations est délicate et leur contrôle par une caméra solidaire de l'extrémité inférieure de la perche ne peut être réalisé dans de très bonnes conditions.

D'autre part, pour la mise en oeuvre de ce procédé, il est nécessaire d'extraire les équipements internes inférieurs de la cuve et donc de les remettre en place après l'opération. L'opération d'extraction comme l'opération de remise en place des équipements internes inférieurs présente des risques importants et augmente le temps nécessaire pour effectuer l'entretien du réacteur à l'arrêt.

On a proposé, dans EP-A-0 185 561, un dispositif de nettoyage des tubes de guidage d'un réacteur nucléaire pouvant être mis en oeuvre sans démonter les équipements internes inférieurs.

Un tel dispositif comporte en particulier un tube rigide de faible diamètre et de grande longueur appelé aiguille qui est introduit dans l'extrémité supérieure de la manchette du tube à nettoyer, après avoir traversé les équipements internes inférieurs, par l'intermédiaire du conduit de guidage correspondant.

Un tel dispositif qui doit être manoeuvré à distance est relativement complexe et doit comporter des moyens de contrôle et de visualisation permettant d'assurer un centrage et une mise en position parfaite de l'extrémité de l'aiguille dans la manchette.

En outre, le temps consacré à la mise en place du dispositif augmente d'autant le temps consacré au nettoyage des tubes-guides. Dans les réacteurs nucléaires actuellement en service, on prévoit cinquante tubes de guidage traversant le fond bombé de la cuve par l'intermédiaire de cinquante manchettes régulièrement réparties sur ce fond bombé et la répétition des opérations de mise en place risque d'augmenter fortement le temps total consacré au nettoyage des tubes de guidage.

Dans tous les cas, l'eau chargée de particules radio-actives récupérée à la sortie de la manchette est aspirée par un dispositif de pompage et envoyée à une installation de filtrage et de décontamination.

Le but de l'invention est donc de proposer un procédé de nettoyage d'un tube de guidage d'un moyen de mesure de flux neutronique dans un réacteur à eau sous pression à l'arrêt comportant une cuve renfermant des équipements internes de support et de maintien des assemblages combustibles du coeur ou équipements internes inférieurs, disposés au-dessus du fond de cuve bombé et comportant en particulier une plaque de support du coeur horizontale, une piscine communiquant avec le volume intérieur de la cuve, l'ensemble étant rempli d'eau, un bâtiment renfermant la piscine et la cuve, à l'intérieur d'un puits de cuve ainsi qu'un local d'instrumentation disposé latéralement par rapport au puits de cuve dans lequel pénètre l'une des extrémités de chacun des tubes de guidage joignant par un parcours comportant au moins un coude le local d'instrumentation au volume intérieur de la cuve dans lequel le tube de guidage débouche par une manchette verticale de traversée du fond de cuve engagée avec un certain jeu radial à l'intérieur de l'extrémité d'entrée d'un conduit de guidage du moyen de mesure ménagé dans les équipements internes inférieurs et débouchant sur la face supérieure de la plaque de support de coeur, au niveau d'une position de pénétration du moyen de mesure de flux dans un assemblage, procédé consistant à injecter, depuis le local d'instrumentation, de l'eau dans le tube de guidage et à produire une aspiration à l'intérieur du conduit de guidage du moyen de mesure, sans démontage des équipements internes inférieurs et sans avoir à mettre en oeuvre des dispositifs complexes.

Dans ce but, on produit l'aspiration dans le conduit de guidage, depuis l'extrémité de sortie de ce conduit de guidage située au niveau de la face supérieure de la plaque support de coeur avec un débit d'aspiration Q2 supérieur au débit Q1 d'injection, le rapport du débit d'aspiration Q2 au débit d'injection Q1 étant au moins égal au rapport de la section d'entrée du conduit de guidage dans laquelle s'engage la manchette de traversée à la section intérieure de la manchette.

Un dispositif de mise en oeuvre de ce procédé est par ailleurs décrit dans la revendication 6.

Afin de bien faire comprendre l'invention, on va maintenant décrire à titre d'exemple non limitatif, en se référant aux figures jointes en annexe, un mode de réalisation du procédé suivant l'invention et un dispositif pour la mise en oeuvre de ce procédé.

La figure 1 est une vue schématique en coupe par un plan vertical d'un réacteur nucléaire, pendant la mise en oeuvre du procédé de nettoyage suivant l'invention.

La figure 2 est une vue en coupe par un plan vertical d'un conduit de guidage traversant les équipements internes inférieurs du réacteur.

Les figures 3a, 3b et 3c sont des vues en coupe verticale d'une partie du dispositif permettant la mise en oeuvre du procédé selon l'invention, suivant trois modes de réalisation différents.

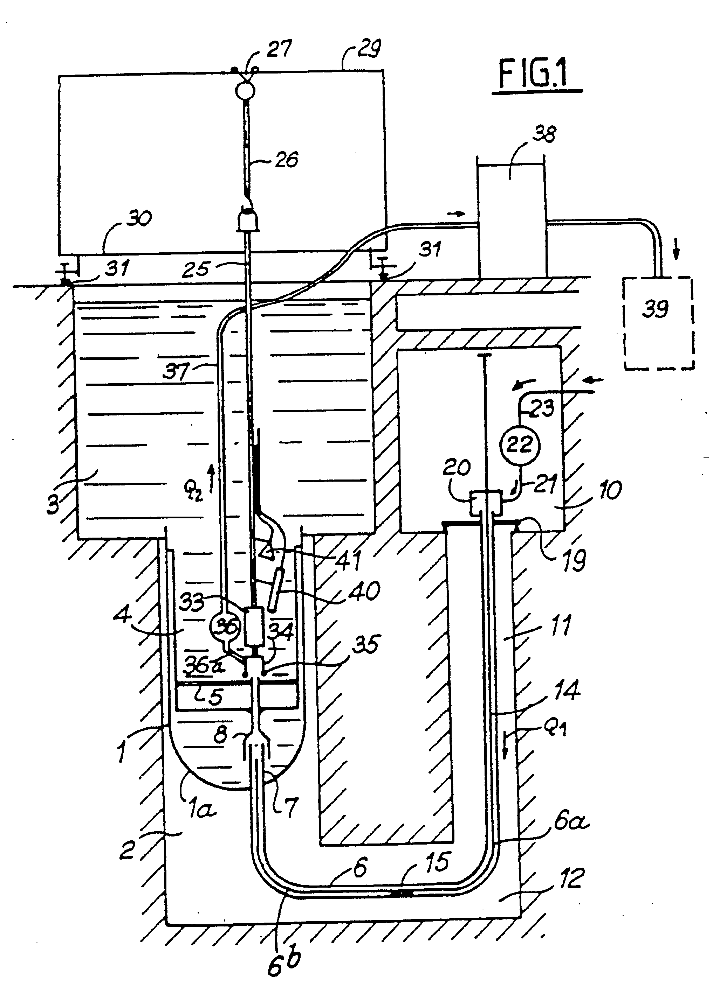

Sur la figure 1, on voit la cuve 1 d'un réacteur nucléaire à eau sous pression disposée à l'intérieur d'un puits de cuve 2 ménagé à l'intérieur de la structure en béton du bâtiment du réacteur. Au-dessus du puits 2 est prévue une piscine 3 constituant la piscine du réacteur.

Sur la figure 1, la cuve 1 du réacteur a été représentée pendant une phase d'entretien du réacteur dans laquelle on effectue diverses opérations de réparation et de maintenance et en particulier le nettoyage des tubes de guidage d'instrumentation. Pendant cette phase d'entretien, le couvercle supérieur de la cuve est enlevé et l'ensemble de la piscine 3 et de la cuve 1 est rempli d'eau.

Les équipements internes supérieurs du réacteur ainsi que les assemblages du coeur ont été extraits de la cuve 1 qui renferme encore les équipements internes inférieurs 4. Ces équipements internes inférieurs 4 comportent en particulier la plaque de support de coeur 5 sur laquelle viennent reposer les assemblages combustibles.

La cuve 1 comporte un fond bombé 1a de forme hémisphérique dans lequel sont fixées de manière étanche des manchettes de traversée telles que la manchette 7 représentée sur la figure 1.

Il est à remarquer que la représentation de la figure 1 est très schématique et ne correspond que de très loin à la réalité. En particulier, le diamètre des manchettes 7 ou pénétrations a été considérablement agrandi, par rapport aux dimensions de la cuve, pour montrer les éléments concernés par le procédé suivant l'invention.

En réalité, le fond 1a de la cuve est traversé par cinquante pénétrations 7 dont le diamètre intérieur est sensiblement égal à 15 mm. La manchette 7 constitue l'extrémité de traversée du fond de cuve 1a, pour un tube d'instrumentation 6 de grande longueur joignant un local d'instrumentation 10 au fond de cuve 1a. Le local d'instrumentation 10 est ménagé à l'intérieur du bâtiment du réacteur dans une position latérale par rapport à la piscine 3. Un puits vertical 11 et un tunnel horizontal 12 permettent de joindre le local d'instrumentation 10 au fond du puits de cuve 2. Les tubes d'instrumentation 6 ont un parcours en L ou en U à l'intérieur du puits 11, du tunnel 12 et du puits de cuve 2, si bien que chacun des tubes d'instrumentation 6 forme deux coudes 6a et 6b ayant un rayon de courbure relativement grand. Un doigt de gant 14 dans lequel on peut déplacer les sondes de mesure de flux neutronique est disposé à l'intérieur du tube 6 de façon à pouvoir se déplacer dans ce tube de guidage 6 par traction ou poussée sur son extrémité située dans le local d'instrumentation 10.

L'extrémité de la manchette 7 pénétrant dans la cuve 1 vient s'engager dans l'extrémité inférieure, ou extrémité d'entrée, d'un conduit de guidage 8 traversant les équipements internes 4 du réacteur, jusqu'à la face supérieure de la plaque de support de coeur 5. Le conduit de guidage 8 débouche sur cette face supérieure de la plaque de support 5, par exemple par l'intermédiaire d'un embout de guidage qui constitue son extrémité de sortie et qui est mis en coïncidence avec l'extrémité inférieure d'un tube d'instrumentation d'un assemblage combustible, lors du chargement du coeur. Le doigt de gant 14 est donc guidé sur tout son parcours entre le local d'instrumentation 10 et le coeur du réacteur.

Pendant leur déplacement, les doigts de gant 14 risquent d'entraîner des particules radio-actives provenant du coeur à l'intérieur du tube de guidage 6. Ces particules 15 ont tendance à se rassembler et à subir un tassement dans les zones des coudes 6a et 6b et dans la partie rectiligne horizontale du tube de guidage 6 située entre les coudes 6a et 6b. Les accumulations de particules 15 augmentent considérablement les efforts de traction ou de poussée nécessaires pour assurer le déplacement du doigt de gant 14.

Il est donc nécessaire, pendant les périodes d'entretien du réacteur nucléaire, d'effectuer le nettoyage des tubes 6, pour faire disparaître les accumulations de particules 15.

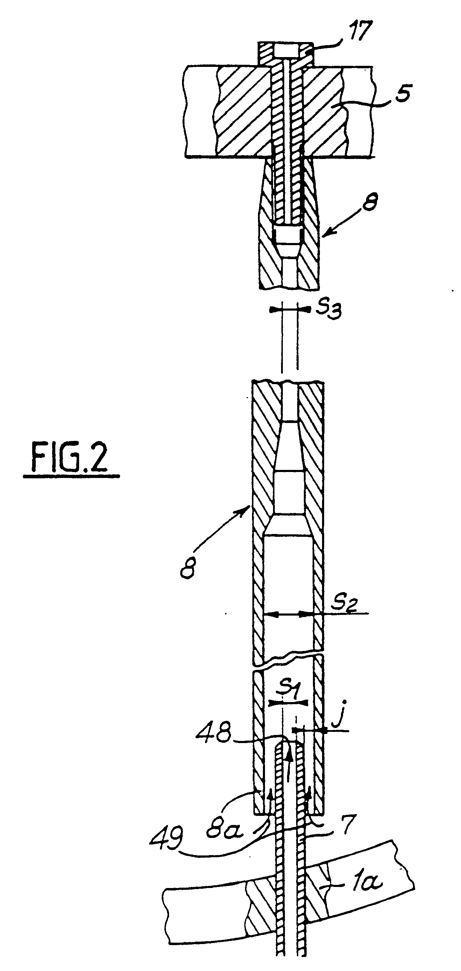

En se reportant à la figure 2, on voit de manière plus détaillée la structure d'un conduit de guidage 8 traversant les équipements internes inférieurs 4 du réacteur, jusqu'à la face supérieure de la plaque de support de coeur 5.

On voit que le conduit de guidage 8 comporte plusieurs parties successives dont le diamètre est décroissant depuis l'extrémité d'entrée du conduit de guidage située à sa partie inférieure, jusqu'à sa partie de sortie située juste au-dessus de la plaque de support 5. La manchette 7 pénètre, sur une certaine longueur, à l'intérieur de l'extrémité d'entrée 8a du conduit 8, avec un jeu radial J relativement important. Ce jeu radial permet de faciliter la mise en place des équipements internes inférieurs à l'intérieur de la cuve 1 du réacteur, cette opération nécessitant la mise en coïncidence des cinquante extrémités 8a des conduits de guidage avec les cinquante manchettes 7 correspondantes fixées dans le fond de cuve 1a.

Le conduit de guidage 8 se termine, au niveau de la plaque de support de coeur 5, par un embout 17 destiné à venir en coïncidence, lors du chargement du coeur avec un tube d'instrumentation d'un assemblage combustible.

En se reportant de nouveau à la figure 1, on va maintenant décrire le dispositif utilisé pour le nettoyage des tubes d'instrumentation 6, afin d'éliminer les accumulations de particules 15 pouvant se trouver dans ces tubes.

Le dispositif qui va être décrit est placé dans des positions successives lui permettant d'effectuer le nettoyage de chacun des tubes d'instrumentation 6 successivement.

Les extrémités des tubes 6 débouchant dans le local d'instrumentation 10 sont fixées sur une plaque horizontale 19 située à un niveau supérieur au niveau de la cuve 1 du réacteur. Chacun des tubes 6 est solidaire à son extrémité d'un boîtier 20 muni de joints d'étanchéité permettant d'assurer le passage et le déplacement du doigt de gant 14 tout en maintenant le boîtier 20 étanche. Le boîtier 20 est également relié à une conduite d'injection 21 qui peut être alimentée en eau déminéralisée sous pression par l'intermédiaire d'une pompe 22 et d'une conduite d'alimentation 23.

Chacun des tubes d'instrumentation 6 comporte un boîtier étanche d'injection tel que le boîtier 20 relié par une conduite d'injection 21 à la pompe 22.

Sur la figure 1, la cuve du réacteur nucléaire a été représentée dans sa position permettant l'entretien du réacteur et en particulier le nettoyage des tubes d'instrumentation. La cuve est ouverte, les assemblages combustibles du coeur ont été extraits et la cuve et la piscine 3 sont remplies d'eau, les boîtiers d'étanchéité 20 sont mis en place sur les extrémités des tubes d'instrumentation 6 avant remplissage de la piscine.

Avant d'extraire les assemblages du coeur, on met les doigts de gant dans leur position extraite, l'extrémité du doigt de gant située à l'intérieur du local 10 ayant une longueur voisine de 6,50 m. Le doigt de gant est ainsi totalement extrait du coeur et des équipements internes inférieurs 4 maintenus en place dans la cuve 1.

Le dispositif de nettoyage permettant la mise en oeuvre du procédé suivant l'invention comporte une perche verticale de grande longueur 25 suspendue à l'extrémité d'un palan 26 monté circulant sur une voie de circulation 29, par l'intermédiaire d'un chariot 27. La voie de circulation 29 constituée par des rails est elle-même portée par une passerelle 30 circulant sur des rails 31 fixés sur les bords de la piscine 3.

Les éléments 26, 27, 29, 30, 31 font partie de la machine de chargement du réacteur.

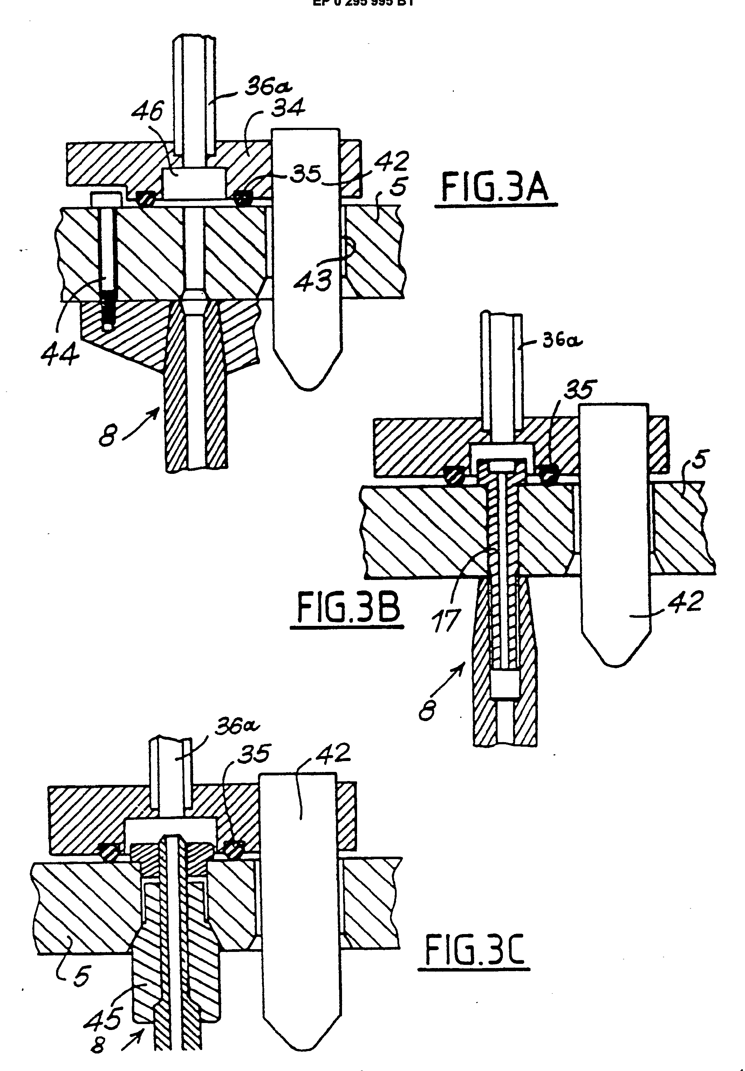

Ce dispositif permet de mettre en place la perche 25 à la verticale de chacun des conduits de guidage 8 des internes inférieurs 4, successivement. La perche 25 porte à son extrémité un lest 33 sous lequel est fixée une cloche 34 munie d'un joint d'étanchéité 35 qui sera décrite plus en détail en se référant aux figures 3a, 3b et 3c.

Une pompe 36 est reliée par l'intermédiaire d'un conduit d'aspiration 36a au volume intérieur de la cloche 34. La sortie de refoulement de la pompe est reliée, par l'intermédiaire d'un conduit souple 37, à l'entrée d'un filtre 38 dont la sortie communique avec un circuit 39 d'évacuation des effluents. Le circuit 39 peut être soit le circuit d'évacuation des effluents du réacteur nucléaire, soit le circuit de filtration de l'eau de la piscine. Dans ce second cas, après une deuxième filtration, les effluents épurés sont envoyés à la piscine 3.

Pour permettre la mise en place de la perche 25 et de la cloche 34 dans une position voulue sur la face supérieure de la plaque de support de coeur 5, on utilise une caméra vidéo 40 et un projecteur 41 qui permettent de contrôler à distance la mise en place de la cloche 34.

Sur les figures 3a, 3b et 3c, on a représenté trois modes de réalisation différents de l'extrémité débouchant sur la face supérieure de la plaque de support de coeur 5, du conduit de guidage d'instrumentation 8.

Sur la figure 3a, le conduit débouche directement par un perçage traversant la plaque 5. L'extrémité du conduit 8 est fixée sur la plaque 5 par des vis 44.

Sur la figure 3b qui correspond au mode de réalisation représenté également sur la figure 2, le conduit 8 se termine par un embout d'extrémité 17 fixé dans un alésage traversant la plaque de support de coeur 5.

Sur la figure 3c, le conduit 8 se termine par un embout 45 en plusieurs parties fixé dans un alésage de grand diamètre de la plaque de support de coeur 5.

La cloche 34 du dispositif de nettoyage comportant le joint d'étanchéité 35 est adaptée à la configuration de l'extrémité du conduit de guidage 8.

Dans tous les cas, cette cloche 34 est constituée par une platine dans laquelle est prévu un évidement 46 entouré par le joint 35. La cloche 34 est solidaire d'au moins deux pions de centrage et de positionnement tels que le pion 42, qui viennent se centrer dans des trous 43 de la plaque 5 et, généralement, dans des trous de passage d'eau de refroidissement du réacteur.

L'extrémité du conduit 36a est fixée sur la cloche 34 de façon à déboucher dans la chambre délimitée par l'évidement 46, le joint 35 et la plaque de support de coeur 5, lorsque le dispositif est en position de service comme représenté sur les figures 3a, 3b et 3c.

Pour effectuer le nettoyage d'un tube 6, la cloche 34 est mise en place sur la plaque de support de coeur 5, au-dessus de l'extrémité du conduit de guidage 8 correspondant au tube 6 à nettoyer.

On utilise pour celà la perche 25 qui est amenée, grâce au portique 30, au chariot 27 et au palan 26, à la verticale du conduit de guidage 8.

Les doigts de positionnement 42 de la cloche 34 sont introduits dans des trous de passage d'eau 43 qui réalisent le positionnement et le centrage de la cloche 34. La perche est descendue jusqu'au moment où le joint 35 vient reposer sur la face supérieure de la plaque support 5. Le lest 33 fixé à l'extrémité de la perche permet d'appliquer une certaine pression sur le joint 35.

La mise en place de la cloche 34 à laquelle est relié le dispositif d'aspiration 36, 36a est assurée et contrôlée grâce à la caméra vidéo 40 et au projecteur 41.

L'opération de nettoyage proprement dite peut alors commencer. Cette opération est effectuée en envoyant un débit d'eau déminéralisée Q1 dans le tube 6, ce débit étant injecté dans le boîtier 20 par la pompe 22 et le conduit d'injection 21. Le débit Q1 est choisi à une valeur suffisante pour que la circulation d'eau dans le tube 6 entraîne les particules radio-actives 15 accumulées dans le conduit qui sont ensuite transportées jusqu'à la sortie de la manchette 7, à l'intérieur de l'extrémité d'entrée 8a du conduit de guidage 8.

Simultanément à l'injection de l'eau déminéralisée dans le tube 6, la pompe 36 est mise en fonctionnement avec un débit d'aspiration Q2 supérieur à Q1 et déterminé pour que les particules radio-actives parvenant à l'extrémité de la manchette 7 avec l'eau déminéralisée de nettoyage soient aspirées de façon certaine par l'ensemble d'aspiration 36, 36a.

En se reportant à la figure 2, on voit que la section intérieure S1 de la manchette 7 est sensiblement inférieure à la section S2 de l'extrémité d'entrée 8a du conduit de guidage 8. Les particules radio-actives entraînées par l'eau de nettoyage et parvenant à l'extrémité de la manchette 7 risquent donc de retomber en fond de cuve.

On établit donc un débit d'aspiration Q2 tel que le rapport Q2/Q1 soit sensiblement égal ou supérieur au rapport S2/S1. La vitesse V2 dans la partie d'extrémité 8a du conduit de guidage 8 est alors sensiblement égale ou supérieure à la vitesse V1 de l'eau de nettoyage dans laquelle sont entraînées les particules radio-actives. Le courant de nettoyage est donc entraîné vers le haut dans le conduit de guidage et les particules radio-actives ne peuvent retomber en fond de cuve. Un débit Q2-Q1 est aspiré en fond de cuve si bien qu'aucune circulation de liquide ne peut se faire dans le sens descendant.

Sur la figure 2, on a représenté le flux de nettoyage du tube par la flèche 48 et le flux d'eau aspiré en fond de cuve par les flèches 49.

Dans le cas d'une manchette ayant une section intérieure dont le diamètre est de 15 mm et d'un conduit de guidage dont la section d'entrée a un diamètre de 70 mm, le rapport S2/S1 a pour valeur :

$$38, 5/1, 76 \simeq 22.$$

Pour assurer un balayage de l'intérieur du tube de guidage suffisant pour entraîner les particules radio-actives, on a dû établir une vitesse de circulation V1 de l'eau déminéralisée de nettoyage de 0,3 m/s. Le débit Q1 est alors de 0,19 m³/h et le débit Q2 est donc:

$$Q2 = 22 \times 0,19 = 4 \text{ m}^3/\text{h}.$$

En utilisant ces débits d'injection et d'aspiration respectivement, on réalise un nettoyage avec une aspiration de l'ensemble des particules entraînées par le fluide de nettoyage. Les particules en suspension dans l'eau de nettoyage et dans l'eau aspirée en fond de cuve parviennent à la chambre délimitée par la cloche 34 et la plaque de support de coeur 5 dans laquelle débouche la conduite 36a. Les particules sont ensuite entraînées dans la conduite 36a par la pompe 36 puis refoulées dans la conduite 37 jusqu'au filtre 38 où la plupart de ces particules sont piégées. Le fluide aspiré et éventuellement un faible reliquat de particules sont ensuite envoyés dans le circuit 39 où ils constituent des effluents. Eventuellement, après une seconde filtration, ces effluents sont renvoyés à la piscine 3.

L'étanchéité de la cloche 34 est assurée d'une part grâce au poids du lest 33 et d'autre part grâce à la différence de pression de part et d'autre de la cloche 34. En effet, la cloche 34 est soumise à la pression de l'eau remplissant la piscine et la cuve sur sa surface extérieure et la chambre interne de cette cloche dans laquelle débouche la conduite 36a est soumise à la dépression créée par la pompe. Il en résulte une pression d'appui sur la cloche et une compression du joint 35 qui assurent une bonne étanchéité sur la surface supérieure de la plaque support 5, autour de l'extrémité de sortie du conduit 8.

A l'issue de l'opération de nettoyage, son efficacité peut être appréciée de deux façons différentes :

— on peut mesurer l'effort d'insertion des doigts de gant avant et après nettoyage et contrôler ainsi directement l'efficacité du nettoyage,

— on peut également évaluer la quantité de particules récupérées par le filtre 38, en mesurant l'activité ou la masse de ces particules ou en effectuant un examen visuel ; on obtient ainsi une mesure indirecte de l'efficacité du nettoyage.

Le procédé de nettoyage suivant l'invention présente l'avantage de pouvoir être mis en oeuvre sans avoir à sortir les équipements internes inférieurs de la cuve du réacteur. On obtient ainsi un gain de temps sur l'opération globale de nettoyage, on évite des risques d'endommagement des équipements internes en cours de manutention et l'on réduit les doses de radio-activité reçues par le personnel effectuant l'entretien du réacteur, pendant la manutention des équipements internes inférieurs. La dose de radio-activité reçue lors de cette manutention est de l'ordre de 1 Rem/h en bord de piscine.

D'autre part, le procédé suivant l'invention peut être mis en oeuvre sans utiliser un dispositif complexe d'aspiration tel que celui décrit dans la demande EP-A-0185561 mentionnée ci-dessus. Le matériel utilisé est plus simple et moins coûteux et sa mise en oeuvre est plus rapide. La durée d'intervention totale est donc beaucoup plus courte.

D'autre part, le procédé suivant l'invention permet de récupérer parfaitement toutes les particules radio-actives entraînées par l'eau de nettoyage.

Le procédé et le dispositif suivant l'invention ne se limitent pas aux modes de réalisation qui ont été décrits.

C'est ainsi qu'on a décrit ci-dessus un procédé de nettoyage qui est effectué après déchargement complet du coeur mais qu'il est également possible d'effectuer ce nettoyage au cours d'un déchargement seulement partiel en modifiant de façon très limitée le dispositif utilisé.

On peut par exemple munir la perche 25 d'un carénage ayant l'encombrement extérieur d'un assemblage combustible du réacteur, ce carénage contenant la cloche, la pompe et les tubes souples d'aspiration et de refoulement reliés à la pompe. L'ensemble des moyens utilisés pour l'aspiration étant contenu dans un carénage ayant l'encombrement d'un assemblage combustible, la mise en place de ce carénage dans le coeur est facilitée même si le déchargement du réacteur n'est que partiel. On évite ainsi d'accrocher les assemblages ou des dispositifs de nettoyage voisins en descendant le carénage contenant les moyens d'aspiration en position de service sur la plaque support de coeur.

On peut également remplacer la perche 25 par un assemblage combustible postiche dont on assure la manutention avec le mât de la machine de chargement du réacteur. Cet assemblage combustible postiche contient comme précédemment, l'ensemble d'aspiration comportant la cloche, la pompe et les tubes d'aspiration.

L'invention peut s'appliquer à tout type de réacteur nucléaire comportant des tubes d'instrumentation débouchant dans des conduits traversant la plaque de support du coeur, quel que soit le jeu radial de montage entre l'extrémité du tube d'instrumentation et le conduit de guidage.

**Revendications**

1. Procédé de nettoyage d'un tube de guidage (6) d'un moyen de mesure (14) de flux neutronique dans un réacteur à eau sous pression à l'arrêt comportant une cuve (1) renfermant des équipements internes (4, 5) de support et de maintien des assemblages combustibles du coeur ou équipements internes inférieurs disposés au-dessus du fond de cuve bombé (1a) et comportant en particulier, une plaque de support de coeur (5) horizontale, une piscine (3) communiquant avec le volume intérieur de la cuve (1), l'ensemble étant rempli d'eau, un bâtiment renfermant la piscine (3) et la cuve (1), à l'intérieur d'un puits de cuve (2) ainsi qu'un local d'instrumentation (10) disposé latéralement par rapport au puits de cuve (2) dans lequel pénètre l'une des extrémités de chacun des tubes de guidage (6) joignant par une parcours comportant au moins un coude (6a, 6b) le local d'instrumentation (10) au volume intérieur de la cuve (1) dans lequel le tube de guidage (6) débouche par une manchette verticale (7) de traversée du fond de cuve (1a) engagée avec un certain jeu radial à l'intérieur de l'extrémité d'entrée (8a) d'un conduit de guidage (8) du moyen de mesure (14) ménagé dans les équipements internes inférieurs (4) et débouchant sur la face supérieure de la plaque de support de coeur (5), au niveau d'une position de pénétration du moyen de mesure de flux dans un assemblage, procédé consistant à injecter, depuis le local d'instrumentation (10), de l'eau dans le tube de guidage (6) et à produire une aspiration à l'intérieur du conduit de guidage (8) du moyen de mesure (14), caractérisé par le fait qu'on produit l'aspiration dans le conduit de guidage (8) depuis l'extrémité de sortie de ce conduit de guidage (8) située au niveau de la face supérieure de la plaque de support de coeur (5) avec un débit d'aspiration Q2 supérieur au débit d'injection Q1.

2. Procédé suivant la revendication 1, caractérisé par le fait que le rapport du débit d'aspiration Q2 au débit d'injection Q1 est sensiblement égal ou supérieur au rapport de la section d'entrée (8a) du conduit de guidage (8) dans laquelle s'engage la manchette de traversée (7), à la section intérieure de la manchette (7).

3. Procédé suivant l'une quelconque des revendications 1 et 2, caractérisé par le fait que l'eau aspirée à l'intérieur du conduit de guidage (8) est ensuite filtrée pour retenir les particules radio-actives en suspension provenant du tube de guidage (6).

4. Procédé suivant la revendication 3, caractérisé par le fait que l'eau filtrée est ensuite envoyée dans un circuit (39) d'élimination des effluents du réacteur nucléaire.

5. Procédé suivant la revendication 3, caractérisé par le fait que l'eau filtrée est ensuite renvoyée dans la piscine (3) du réacteur nucléaire.

6. Dispositif de nettoyage d'un tube de guidage (6) d'un moyen de mesure (14) de flux neutronique dans un réacteur à eau sous pression à l'arrêt comportant une cuve (1) renfermant des équipements internes (4) de support et de maintien des assemblages combustibles du coeur, ou équipements internes inférieurs, disposés au-dessus du fond de cuve bombé (1a) et comportant en particulier une plaque de support du coeur (5) horizontale, une piscine (3) communiquant avec le volume intérieur de la cuve (1), l'ensemble étant rempli d'eau, un bâtiment renfermant la piscine (3) et la cuve (1), à l'intérieur d'un puits de cuve (2) ainsi qu'un local d'instrumentation (10) disposée latéralement par rapport au puits de cuve (2) dans lequel pénètre l'une des extrémités de chacun des tubes de guidage (6) joignant, par un parcours comportant au moins un coude (6a, 6b), le local d'instrumentation (10) au volume intérieur de la cuve (1) dans lequel le tube de guidage (6) débouche par une manchette verticale (7) de traversée du fond de cuve (1a) engagée avec un certain jeu radial à l'intérieur de l'extrémité d'entrée d'un conduit de guidage (8) du moyen de mesure (14) ménagé dans les équipements internes inférieurs (4) et débouchant sur la face supérieure de la plaque de support de coeur (5) au niveau d'une position de pénétration du moyen de mesure de flux dans un assemblage comportant de manière connue des moyens (20, 21, 22) d'injection d'eau de nettoyage dans le tube (6) situés dans le local d'instrumentation (10), des moyens (36, 36a) d'aspiration dans le conduit de guidage (8) et un moyen de filtration (38) des effluents aspirés dans le conduit de guidage, caractérisé par le fait qu'il comporte en outre une cloche (34) munie d'un joint (35) destiné à venir en position étanche, sur la plaque de support (5) autour de l'extrémité de sortie du conduit de guidage (8), les moyens d'aspiration (35, 36, 37) étant en communication avec le volume intérieur de la cloche (34).

7. Dispositif suivant la revendication 6, caractérisé par le fait que la cloche (34) et les moyens d'aspiration (35, 36) sont fixés à l'extrémité d'une perche (25) de grande longueur suspendue à une palan (26) se déplaçant au-dessus de la piscine (3) du réacteur.

8. Dispositif suivant la revendication 7, caractérisé par le fait qu'un lest (33) est fixé sur la perche (25) dans sa partie d'extrémité reliée à la cloche (34).

9. Dispositif suivant l'une quelconque des revendications 7 et 8, caractérisé par le fait qu'une caméra vidéo (40) et un projecteur (41) sont fixés sur la perche (25), pour le contrôle de la mise en place de la cloche (34).

10. Dispositif suivant l'une quelconque des revendications 6 à 9, caractérisé par le fait que les moyens d'aspiration (36, 36a) sont reliés au dispositif de filtration (38) par une conduite souple (37).

11. Dispositif suivant l'une quelconque des revendications 6 à 10, caractérisé par le fait que la cloche (34) est solidaire d'au moins deux doigts de centrage et de positionnement (42) destinés à venir se loger dans des trous de passage d'eau (43) traversant la plaque de support de coeur 5.

12. Dispositif suivant l'une quelconque des revendications 6 à 11, caractérisé par le fait que la cloche (34) et les moyens d'aspiration (36, 36a) sont logés dans un carénage ayant l'encombrement extérieur et la forme d'un assemblage combustible du réacteur nucléaire.

**Patentansprüche**

1. Reinigungsverfahren für ein Führungsrohr (6) einer Neutronenflußmeßeinrichtung (14) in einem abgeschalteten Druckwasserreaktor mit einem Behälter (1), der innere Trag und Halteeinrichtungen (4, 5) für Kernbrennelementkassetten oder untenliegende, über dem gewölbten Behälterboden (1a) angeordnete Inneneinrichtungen enthält, und insbesondere mit einer horizontalen Kernträgerplatte (5), einem mit dem Innenraum des Behälters (1) verbundenen Reaktorbecken (3), wobei das Ganze mit Wasser aufgefüllt ist, einem Mantel, welcher das Reaktorbecken (3) mit dem Behälter (1) im Inneren eines Behälterschachts (2) sowie einen seitlich des Behälterschachts (2) angeordneten Instrumentenraum (10) umschließt, in den eines der Enden der Führungsrohre (6) einmündet, die den Instrumentenraum (10) durch einen mit mindestens einem Knick (6a, 6b) versehenen Durchgang mit dem Innenraum des Behälters (1) verbinden, in den das Führungsrohr (6) durch eine vertikale Durchgangsmanschette (7) des Behälterbodens (1a) mündet, die mit einem bestimmten Radialspiel in das Innere des äußersten Einlasses (8a) eines Führungskanals (8) der Meßeinrichtung (14) eingreift, der in den untenliegenden Inneneinrichtungen (4) angeordnet ist und auf der Oberseite der Kernträgerplatte (5) auf gleicher Höhe mit einer Eindringstellung der Neutronenflußmeßeinrichtung in einer Brennelementkassette mündet, wobei das Verfahren ein Einspritzen von Wasser in das Führungsrohr (6) vom Instrumentenraum (10) aus und die Erzeugung einer Ansaugung im Inneren des Führungskanals (8) der Meßeinrichtung (14) umfaßt, dadurch gekennzeichnet, daß die Ansaugung im Führungskanal (8) vom äußersten Ende dieses auf gleicher Höhe mit der Oberseite der Kernträgerplatte (5) angeordneten Führungskanals (8) her mit einer Ansaugleistung Q2 erzeugt wird, die größer als die Einspritzleistung Q1 ist.

2. Verfahren nach Anspruch 1, dadurch gekennzeichnet, daß das Verhältnis von Ansaugleistung Q2 zu Einspritzleistung Q1 etwa gleich oder größer ist dem Verhältnis von Einlaßquerschnitt (8a) des Führungskanals (8), in den die Durchgangsmanschette (7) einmündet, zu Innenquerschnitt der Manschette (7).

3. Verfahren nach einem der Ansprüche 1 und 2, dadurch gekennzeichnet, daß das im Inneren des Führungskanals (8) angesaugte Wasser anschließend gefiltert wird durch Zurückhaltung der radioaktiven Partikel in der aus dem Führungsrohr (6) kommenden Suspension.

4. Verfahren nach Anspruch 3, dadurch gekennzeichnet, daß das gefilterte Wasser anschließend in einen Kreis (39) zur Beseitigung der Abwässer des Kernreaktors gefördert wird.

5. Verfahren nach Anspruch 3, dadurch gekennzeichnet, daß das gefilterte Wasser anschließend in das Reaktorbecken (3) zurückgefördert wird.

6. Reinigungsvorrichtung für ein Führungsrohr (6) einer Netronenflußmeßeinrichtung (14) in einem abgeschalteten Druckwasserreaktor mit einem Behälter (1), der innere Trag und Halteeinrichtungen (4) für Kernbrennelementkassetten oder untenliegende, über dem gewölbten Behälterboden (1a) angeordnete Inneneinrichtungen enthält, und insbesondere mit einer horizontalen Kernträgerplatte (5), einem mit dem Innenraum des Behälters (1) verbundenen Reaktorbecken (3), wobei das Ganze mit Wasser aufgefüllt ist, einem Mantel, welcher das Reaktorbecken (3) und den Behälter (1) im Inneren eines Behälterschachts (2) sowie einen seitlich des Behälterschachts (2) angeordneten Instrumentenraum (10) umschließt, in den eines der Enden der Führungsrohre (6) einmündet, die den Instrumentenraum (10) durch einen mit mindestens einem Knick (6a, 6b) versehenen Durchgang mit dem Innenraum des Behälters (1) verbinden, in den das Führungsrohr (6) durch eine vertikale Durchgangsmanschette (7) des Behälterbodens (1a) mündet, die mit einem bestimmten Radialspiel in das Innere des äußersten Einlasses eines Führungskanals (8) der Meßeinrichtung (14) eingreift, der in den untenliegenden Inneneinrichtungen (4) angeordnet ist und auf der Oberseite der Kernträgerplatte (5) auf gleicher Höhe mit einer Eindringstellung der Neutronenflußmeßeinrichtung in einer Brennelementkassette mündet, die bekannte im Instrumentenraum (10) angeordnete Reinigungsmittel (20, 21, 22) zum Einspritzen von Wasser in das Rohr (6), Ansaugmittel (36, 36a) im Führungskanal (8) und eine Filtervorrichtung (38) für die in dem Führungskanal angesaugten Schadstoffe aufweist, dadurch gekennzeichnet, daß sie außerdem eine Glocke (34) mit einer Dichtung (35) aufweist, die dazu bestimmt ist, um in eine Dichtstellung auf der Kernträgerplatte (5) um das äußerste Ende des Ausgangs des Führungskanals (8) herum zu gelangen, wobei die Ansaugmittel (35, 36, 37) mit dem Innenvolumen der Glocke (34) verbunden sind.

7. Vorrichtung nach Anspruch 6, dadurch gekennzeichnet, daß die Glocke (34) und die Ansaugmittel (35, 36) am Ende einer langen Stange (25) befestigt sind, die an einem über dem Reaktorbecken (3) verschiebbaren Flaschenzug aufgehängt ist.

8. Vorrichtung nach Anspruch 7, dadurch gekennzeichnet, daß auf der Stange (25) an ihrem mit der Glocke (34) verbundenen Ende ein Ballast (33) befestigt ist.

9. Vorrichtung nach einem der Ansprüche 7 und 8, dadurch gekennzeichnet, daß eine Videokamera (40) und ein Scheinwerfer (41) an der Stange (25) zur Stellungsüberwachung der Glocke (34) befestigt sind.

10. Vorrichtung nach einem der Ansprüche 6 bis 9, dadurch gekennzeichnet, daß die Ansaugmittel (36, 36a) mit der Filtervorrichtung (38) durch eine flexible Leitung (37) verbunden sind.

11. Vorrichtung nach einem der Ansprüche 6 bis 10, dadurch gekennzeichnet, daß die Glocke (34) mit mindestens zwei Zentrier- und Positionierstiften (42) fest verbunden ist, die zur Aufnahme in Wasserbohrungen bestimmt sind, welche durch die Kernträgerplatte (5) hindurchgehen.

12. Vorrichtung nach einem der Ansprüche 6 bis 11, dadurch gekennzeichnet, daß die Glocke (34) und die Ansaugmittel (36, 36a) in einer Verkleidung angeordnet sind, die die Außenabmessung und die Form einer Kernreaktorbrennelementkassette hat.

## Claims

1. Process for cleaning a guide tube (6) of an apparatus (14) for measuring the neutron flux in a pressurised-water reactor at shutdown, the said reactor comprising a vessel (1) containing internal equipment (4, 5) for supporting and retaining the fuel assemblies of the core, or lower internal equipment, arranged above the domed vessel bottom (1a) and comprising, in particular, a horizontal core support plate (5), a pool (3) communicating with the inner volume of the vessel (1), the assembly as a whole being filled with water, a building containing the pool (3) and the vessel (1) within a vessel well (2), and an instrumentation room (10) which is arranged laterally relative to the vessel well (2) and into which penetrates one end of each of the guide tubes (6) which, over a path including at least one bend (6a, 6b), connect the instrumentation room (10) to the inner volume of the vessel (1), into which the guide tubes (6) opens via a vertical sleeve (7) leading through the vessel bottom (1a) and engaging with some degree of radial play in the inlet end (8a) of a guide conduit (8) of the measuring apparatus (14), formed in the lower internal equipment (4) and opening onto the upper face of the core support plate (5), level with an entry position of the apparatus for measuring the flux in a fuel assembly, the said process involving injecting water into the guide tube (6) from the instrumentation room (10) and generating suction within the guide conduit (8) of the measuring apparatus (14), characterised in that the suction is generated in the guide conduit (8) from the outlet end of this guide conduit (8) located level with the upper face of the core support plate (5), with a suction rate Q2 higher than the injection rate Q1.

2. Process according to Claim 1, characterised in that the ratio of the suction rate Q2 to the injection rate Q1 is substantially equal to or higher than the ratio between the inlet cross-section (8a) of the guide conduit (8), in which the lead-through sleeve (7) engages, and the inner cross-section of the sleeve (7).

3. Process according to either one of Claims 1 and 2, characterised in that the water sucked up inside the guide conduit (8) is subsequently filtered in order to retain the suspended radioactive particles coming from the guide tube (6).

4. Process according to Claim 3, characterised in that the filtered water is subsequently conveyed into a circuit (39) for discharging the effluent from the nuclear reactor.

5. Process according to Claim 3, characterised in that the filtered water is subsequently returned into the pool (3) of the nuclear reactor.

6. Device for cleaning a guide tube (6) of an apparatus (14) for measuring the neutron flux in a pressurised-water reactor at shutdown, the said reactor comprising a vessel (1) containing internal equipment (4) for supporting and retaining the fuel assemblies of the core, or lower internal equipment, arranged above the domed vessel bottom (1a) and comprising, in particular, a horizontal core support plate (5), a pool (3) communicating with the inner volume of the vessel (1), the assembly as a whole being filled with water, a building containing the pool (3) and the vessel (1) within a vessel well (2), and an instrumentation room (10) which is arranged laterally relative to the vessel well (2) and into which penetrates one end of each of the guide tubes (6) which, over a path including at least one bend (6a, 6b), connect the instrumentation room (10) to the inner volume of the vessel (1), into which the guide tube (6) opens via a vertical sleeve (7) leading through the vessel bottom (1a) and engaging with some degree of radial play in the inlet end of a guide conduit (8) for the measuring apparatus (14), formed in the lower internal equipment (4) and opening onto the upper face of the core support plate (5), level with an entry position of the apparatus for measuring the flux in a fuel assembly, the said device comprising, in known manner, means (20, 21, 22) for injecting cleaning water into the tube (6), located in the instrumentation room (10), means (36, 36a) for suction into the guide conduit (8) and means (38) for filtering the effluent sucked into the guide conduit, characterised in that there is also has a bell (34) equipped with a gasket (35) intended to fit as a tight seal on the support plate (5) round the outlet end of the guide conduit (8), the suction means (35, 36, 37) being in communication with the inner volume of the bell (34).

7. Device according to Claim 6, characterised in that the bell (34) and the suction means (35, 36) are fastened to the end of a very long pole (25) suspended on a hoist (26) travelling above the pool (3) of the reactor.

8. Device according to Claim 7, characterised in that ballast (33) is fastened to the pole (25) at its end part connected to the bell (34).

9. Device according to either one of claims 7 and 8, characterised in that a video camera (40) and a spotlight (41) are fastened to the pole (25) in order to monitor the installation of the bell (34).

10. Device according to any one of claims 6 to 9 characterised in that the suction means (36, 36a) are connected to the filtration device (3a) by means of a flexible conduit (37).

11. Device according to any one of claims 6 to 10, characterised in that the bell (34) is integral with at least two centering and positioning fingers (42) intended to fit into water passage holes (43) passing through the core support plate (5).

12. Device according to any one of claims 6 to 11, characterised in that the bell (34) and the suction means (36, 36a) are accommodated in a fairing having the outer bulk and the shape of a fuel assembly of the nuclear reactor.

FIG.1

FIG.2

12

FIG.3A

FIG.3B

FIG.3C